# EUROPÄISCHE PATENTSCHRIFT

(11) **EP 0 588 008 B1**
(45) Veröffentlichungstag und Bekanntmachung des Hinweises auf die Patenterteilung: **16.04.1997**
(21) Anmeldenummer: 93111117.3
(22) Anmeldetag: 12.07.1993
(51) Int. Cl.: B29C 47/76, B29C 47/42, B29B 7/84

(54) **Vorrichtung zur Entgasung von insbesondere thermoplastischen Kunststoffschmelzen**
Apparatus for degassing, in particular of melted thermoplasts
Dispositif pour dégazage, en particulier de matières thermoplastiques fondues

(30) Priorität: 18.09.1992 DE 4231231; 18.09.1992 DE 4231232
(43) Veröffentlichungstag der Anmeldung: 23.03.1994
(73) Patentinhaber: HERMANN BERSTORFF Maschinenbau GmbH, D-30627 Hannover (Kleefeld) (DE)
(72) Erfinder: Barth, Udo, Dipl.-Ing., D-30161 Hannover (DE); Chszaniecki, Siegfried, D-30171 Hannover (DE); Martin, Gerhard, Dr. Dr.-Ing., D-66953 Primasens (DE)

(56) Entgegenhaltungen:
- DE-A- 2 905 717
- US-A- 5 108 711
- INDUSTRIAL AND PRODUCTION ENGINEERING Bd. 12, Nr. 3, Oktober 1988, MUNCHEN DE Seiten 16 - 19 , XP000003369 HANS WOBBE 'Comparison of the Degassing Efficiencies of Single-screw and Twin-screw Extruders'
- KUNSTSTOFFE. Bd. 71, Nr. 1, Januar 1981, MUNCHEN DE Seiten 18 - 26 H. WERNER 'Entgasen von Kunststoffen in mehrwelligen Schneckenmaschinen'

## Beschreibung

Die Erfindung betrifft eine Vorrichtung zur Entgasung von thermoplastischen Kunststoffen, hochmolekularen Polymeren oder ähnlicher zu entgasender, flüssiger bis zähflüssiger Stoffe sowie zum Nachkondensieren und Entgasen von Polyamid- oder Polyesterschmelzen.

Aus der US-PS 5,108,711 der Anmelderin ist ein mehrwelliger Dünnschichtreaktor bekannt, der auch zu Entgasungszwecken eingesetzt wird. Der Extruder weist ein senkrecht stehendes Gehäuse auf, mit darin an einer Innenwandung umlaufenden, ein selbstreinigendes Profil aufweisenden Dünnschichtwellen. Die Wellen werden durch ein Planetengetriebe sowohl in Drehbewegung um ihre eigene Achse als auch zu einem an der Gehäuseinnenwandung entlangführenden Umlauf angetrieben.

Die Entgasung der thermoplastischen Schmelze findet dann statt, wenn die auf den Dünnschichtwellen zu dünnen Schichten ausgestrichene Schmelze dem Innenraum zugewandt ist. Der Innenraum ist über eine koaxial darin angeordnete, axiale und radiale Entgasungsbohrungen aufweisende Welle kleinen Durchmessers mit einer Vakuumquelle verbunden. Da die Oberfläche der Dünnschichtwellen Schmelzeschichten aufweisen, wird insgesamt eine sehr große Fläche dünner Schichten gebildet, so daß selbst bei hochviskosen und daher nur sehr schwer zu entgasenden Schmelzen hervorragende Entgasungsergebnisse erzielt werden.

Die Dicke der auf den Dünnschichtwellen sich ausbildenden Schmelzeschicht wird bestimmt vom Abstand des Schneckendichtprofiles der einen Welle zum Schneckendichtprofil der benachbarten und im kämmenden Eingriff damit stehenden Welle.

Einen derartigen Entgasungsvorgang durchzuführen, scheitert an der koaxialen Entgasungsbohrung in der zentralen Welle, die über weitere Bohrungen mit einer Vakuumquelle verbunden ist. Es zeigte sich, daß diese Bohrungen sich nach einer gewissen Zeit durch mitgerissene Restmonomeranteile oder dgl. zusetzten, so daß der Entgasungsvorgang dadurch zum Erliegen kam.

Durch "Kunststoffe 71 (1981) 1, Seiten 20 und 21", ist es andererseits bereits bekannt geworden, ein unter Druck erzeugtes Schmelze/Schleppmittelgemisch aufzuschäumen, um eine Vergrößerung der Entgasungsoberfläche zu erreichen.

Aus der US-PS 5,106,198 der Anmelderin ist eine Entgasungseinrichtung bekannt, die prinzipiell der Einrichtung obiger US-PS 5, 108,711 gleicht und in Fig. 4 und 5 als eine weitere Ausbildung der Entgasungseinrichtung gezeigt wird, die mit einer zentralen, verzahnten Welle sowie Planetspindeln arbeitet.

Die zentrale Welle weist eine Schrägverzahnung auf, die mit der Verzahnung der um ihre Achse rotierenden und umlaufenden Dünnschichtwellen kämmt.

Außen um die kreisförmig angeordneten Dünnschichtwellen ist ein ringförmiger Entgasungsraum angeordnet, an den eine Unterdruck- bzw. Vakuumquelle angeschlossen ist. Der ringförmige Entgasungsraum ermöglicht es, den Unterdruck auf den Außenumfang der Dünnschichtwellen einwirken zu lassen. Es steht somit eine sehr großflächige Schmelzeschicht auf den Dünnschichtwellen für den Entgasungsvorgang zur Verfügung.

Auch bei dieser Einrichtung zeigt sich, daß die Entgasung nach einer gewissen Zeit durch mitgerissene Restmonomeranteile oder dgl. zum Erliegen kommt, weil sich an der Innenwandung der ringförmigen Entgasungskammer Restmonomerteilchen aufbauen, die an dieser Stelle nur sehr umständlich zu entfernen sind.

Da eine Rückführung der Ablagerungen nicht möglich ist, sind somit häufige Betriebsunterbrechungen unerläßlich.

Der Erfindung liegt die Aufgabe zugrunde, die Entgasungseinrichtungen der oben beschriebenen Art so zu verbessern, daß die geschilderten Betriebsstörungen nicht auftreten können. Es muß sichergestellt sein, daß sich keine Ablagerungen bilden können, die als thermisch zersetzte Bestandteile in den Verarbeitungsprozess zurückgelangen können. Auch soll gewährleistet sein, daß beim Einsatz von Schleppmitteln bei der Durchführung des Entgasungsvorganges gute Entgasungsergebnisse erzielt werden.

Die Aufgabe wird durch die Merkmale des Anspruchs 1 gelöst. Die weitere Ausgestaltung der Erfindung ist den Unteransprüchen zu entnehmen.

Mit der erfindungsgemäßen Vorrichtung wird erreicht, daß eine Entgasung der Materialien möglich ist, ohne daß sich auf den Oberflächen der Dünnschichtwellen Ablagerungen aufbauen können. Es findet ein ständiges Auskämmen auch der glatten Innenwandung des Gehäuses und an der Oberfläche der zentralen Welle statt.

Von Vorteil ist es, wenn vor dem Hochleistungsentgasungsabschnitt ein einen Schmelzedruck aufbauender Einschneckenabschnitt angeordnet ist, an den sich ein schmelzestauender und eine Schmelzeabdichtung schaffender Blisterabschnitt anschließt, daß den Blisterabschnitt ein, eine Misch- und Homogenisierwirkung gewährleistender Zahnscheibenabschnitt nachgeordnet ist, daß den Zahnscheibenabschnitt eine Schleppmitteleinspritzdüse zugeordnet ist, daß im Anschluß an den Zahnscheibenabschnitt ein Ringdüsenabschnitt angeordnet ist, und daß sich an diesen ein einen Walzeffekt ausübender Planetwalzenabschnitt anschließt. Der Schaum des Gemisches aus Kunststoffschmelze, Schleppmittel und Restmonomere wird in dem Planetwalzenteil durch die Rotation der Planeten bei gleichzeitigem Umlauf um die Zentralwelle durch den Walzeffekt zerstört, wodurch ein Großteil der Schmelzebläschen platzt und das freigesetzte Gas aus den Bläschen durch den Unterdruck im Hochleistungsentgasungsabschnitt abgesaugt wird. Der Planetwalzenteil fördert die Schmelze im Bereich des Hochleistungsentgasungsabschnitts, in dem der Hauptentgasungsvorgang stattfindet. Im übrigen schäumt das Schmelze/Schleppmittelgemisch nach einer Druckentlastung, d.h. nach dem Einspritzen mittels beispielsweise der Ringdüse in das Planetwalzenteil, sehr stark auf, weil dieses Gemisch eine Temperatur von 150 bis 300 ° C aufweist und das eingedüste Schleppmittel (z.B. Wasser) von den flüssigen in den dampfförmigen Aggregatzustand übergeht und somit enorm aufschäumt. Durch diesen Aufschäumvorgang werden sehr dünne Schmelzschichten, sehr große Entgasungsoberflächen und eine Partialdruckverminderung des zu entgasenden Monomer- oder Lösungsmittelanteils erreicht.

Als vorteilhaft hat es sich erwiesen, wenn der Einschneckenabschnitt eine Länge von 3 bis 5 D (D = Schneckendurchmesser) aufweist. Der Zahnscheibenabschnitt weist vorzugsweise eine Länge von 1 bis 3 D auf.

Im Rahmen der Erfindung ist es weiterhin vorgesehen, daß der Planetwalzenabschnitt Planeträder und eine Zentralspindel aufweist und daß das die Planeträder umgebende Gehäuse eine mit den Planeträdern kooperierende Innenverzahnung aufweist.

Die Effektivität der Vorrichtung kann nochmals gesteigert werden, sofern dem ersten Hochleistungsentgasungsabschnitt ein zweiter nachgeschaltet wird und zwischen beiden jeweils ein Einschneckenabschnitt, ein Blisterabschnitt, ein Zahnscheibenabschnitt und ein Ringdüsenabschnitt angeordnet sind. Es kann so eine äußerst effektive, sich wiederholende Entgasung vorgenommen werden.

Gemäß einer bevorzugten Ausführungsform der Erfindung ist es vorgesehen, daß die Vorrichtung waagerecht angeordnet und das Gehäuse an seiner Oberseite einen Entgasungsdom aufweist, und daß an dem Entgasungsdom eine Unterdruckleitung angeschlossen ist.

Im Rahmen der Erfindung ist vorgesehen, daß das Gehäuse alternativ eine Begasungsöffnung, in die ein reaktives Gas unter Druck eingespritzt wird, aufweisen kann, derart, daß dann die Vorrichtung zur Begasung der Materialien verwendbar ist.

Im Gegensatz zu üblichen Entgasungsextrudern wird bei dieser Maschinengattung erreicht, daß nur durch eine relativ kleine Entgasungsöffnung der gesamte Verfahrensinnenraum einem Unterdruck ausgesetzt werden kann. Der Unterdruck pflanzt sich durch die jeweiligen schmelzefreien Zwickelbereiche sowie in axialer Richtung durch die offenen Querschnitte des Schneckenprofiles zu den Oberflächen aller Dünnschichtwellen fort und reißt Restmonomerbläschen, in denen Reaktionsspaltprodukte und dgl. enthalten sind in den Schmelzeschichten auf, die sich auf den Dünnschichtwellen durch das gegenseitige Abstreifen des Schneckendichtprofils der Dünnschichtwellen ausbilden.

Aber nicht nur in axialer Richtung zu den Dünnschichtwellen pflanzt sich der Unterdruck in dem Gehäuse fort. Auch in radialer Richtung um die einzelnen Dünnschichtwellen herum, d.h. durch das sogenannte "Erdmenger Profil" hindurch, wirkt der Unterdruck auf die Schmelzeschichten ein und läßt die sich dort befindenden winzigen Restmonomerbläschen platzen, so daß das somit freigesetzte Gas abgezogen wird.

Bei herkömmlichen Einschneckenextrudern kann lediglich der unterhalb der Entgasungsöffnung liegende Bereich sowie ein geringer Teil der Schneckengänge dem Unterdruck ausgesetzt werden.

Aber auch bei Doppelschneckenextrudern mit kämmenden Schnecken pflanzt sich der Entgasungsunterdruck nur in einem kleineren Bereich in dem Gehäuse fort, weil sich die Gehäuseoberseite außerhalb der Entgasungsöffnung bis in den Zwickelbereich zwischen den Schnecken erstreckt. Für die Selbstreinigung der Schnecken ist die Erstreckung des Gehäuses bis in die Zwickelbereiche unerläßlich.

Bei der erfindungsgemäßen Einrichtung ist es erstmals für die Aufrechterhaltung der Selbstreinigung nicht mehr erforderlich, das Gehäuse bis in die Zwickelbereiche zwischen den Schnecken herunterzuführen.

Die Selbstreinigung erfolgt erfindungsgemäß durch den kreisförmigen Umlauf der rotierenden Dünnschichtwellen um die Zentralwelle. Durch diesen Umlauf streifen zusätzlich die um ihre eigene Achse rotierenden Dünnschichtwellen sowohl die Gehäuseinnenwandung als auch die Zentralwelle ab und arbeiten somit völlig selbstreinigend.

Trotz der Tatsache, daß in den Zwickelbereichen zwischen den Dünnschichtwellen kein Gehäuse wie bei den Doppelschnecken vorhanden ist, wird also eine Selbstreinigung erhalten.

Darüber hinaus breitet sich der Entgasungsunterdruck wesentlich besser im gesamten Gehäuse aus, weil die Zwickelbereiche frei sind. Das freie Volumen innerhalb des Gehäuses ist wegen der freien Zwickelbereiche wesentlich größer, wodurch somit auch die freien für den Unterdruck erreichbaren Oberflächen wesentlich größer sind als bei herkömmlichen Doppelschneckenextrudern.

Es ist somit erstmalig möglich, den gesamten Verfahrensinnenraum mit den dünnen Schmelzeschichten auf den Oberflächen der Dünnschichtwellen mittels nur einer kleinen Entgasungsöffnung einem Unterdruck auszusetzen, so daß überragende Entgasungsergebnisse auch bei hochviskosen, thermoplastischen Kunststoffen, wie z.B. bei der Nachkondensation bzw. Entmonomerisierung von Polyamiden, erzielt werden.

Ein Ausführungsbeispiel der Erfindung wird in der Zeichnung gezeigt.

Es zeigen:
- Fig. 1: einen Längsschnitt durch eine Vorrichtung mit einem Hochleistungsdünnschichtentgasungsabschnitt;
- Fig. 2: einen Längsschnitt durch einen Hochleistungsentgasungsextruder;
- Fig. 3: einen Querschnitt entlang der Linie II-II in Fig. 1;
- Fig. 4: einen Querschnitt entlang der Linie IV-IV in Fig. 2;
- Fig. 5: eine Draufsicht auf die Entgasungsöffnung sowie den Dünnschichtwellen und gemäß Pfeil III in Fig. 4;
- Fig. 6: eine Draufsicht auf eine Abwicklung aller nebeneinander ausgebreiteter Dünnschichtwellen;
- Fig. 7: einen Querschnitt gemäß der Linie VII-VII in Fig. 1, mit angedeuteter Frontsicht auf die Dünnschichtwellen.

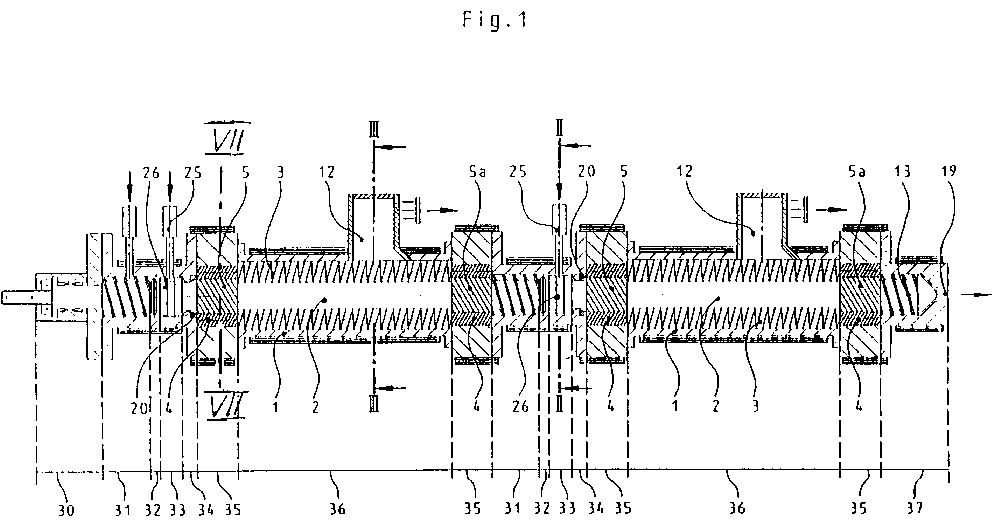

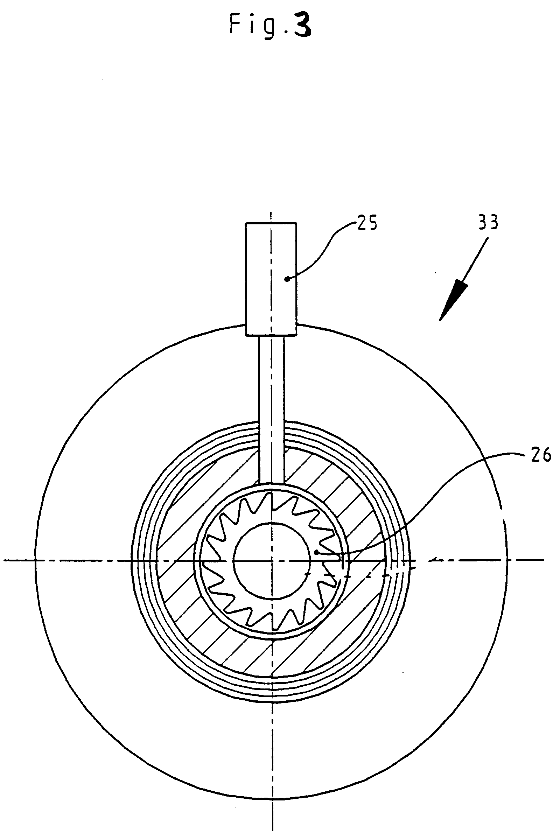

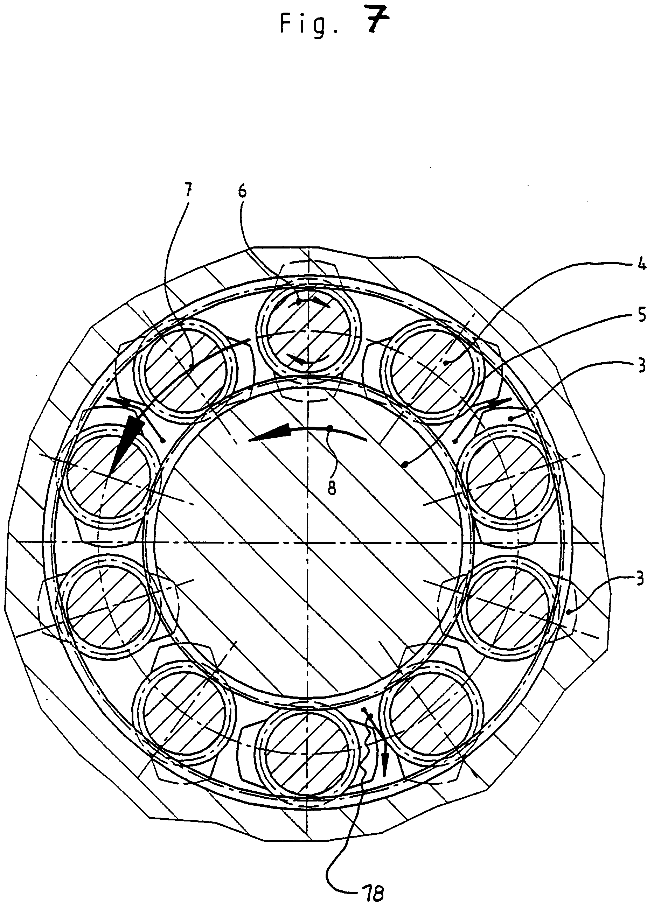

Die in Fig. 1 gezeigte Hochleistungsentgasungsvorrichtung setzt sich aus unterschiedlichen Abschnitten zusammen, die nachfolgend aufgeführt werden.
- Abschnitt 30: ist ein Antriebsabschnitt mit Rückdruck-, Radiallager und Gleitringdichtung. Die Antriebseinheit selbst wird nicht gezeigt. Die Schnecke des Einschneckenabschnittes, der Blister des Blisterabschnittes, die Zahnscheiben des Zahnscheibenabschnittes sind auf einer gemeinsamen Welle angeordnet und die gemeinsame Welle ist drehfest mit mit der Zentralspindel und der glatten Welle verbunden.
- Abschnitt 31: ist ein Einfülleinschneckenteil mit einer Schmelzeeinspeiseöffnung.
- Abschnitt 32: weist einen sogenannten "Blister" auf, der für die Ausbildung einer Schmelzedichtung in Richtung der Schmelzeeinspeiseöffnung vorgesehen wird.
- Abschnitt 33: weist einen Zahnscheibenbereich mit Zahnscheiben 26 auf, wie im Querschnitt auch in Fig. 3 gezeigt wird und der eingesetzt wird, um eine gute Vermischung des durch die Öffnung 25 eingedüsten Schleppmittels mit der Schmelze zu erreichen.
- Abschnitt 34: weist eine Ringdüse auf, die das Schmelze/Schleppmittelgemisch in den Planetwalzenabschnitt eindüst. Durch die Ringdüse wird der höchste Druck nach dem Einschneckenteil aufgebaut, d.h. der Blisterteil 32 und der Ringdüsenteil werden bei hohem Druck von der Einschnecke mit Schmelze überfördert. Der hohe Druck ist erforderlich, damit das Schleppmittel, z.B. H₂O in flüssigem Zustand ohne Verdampfung von den Zahnscheiben 26 in die Kunststoffschmelze eingemischt werden kann.
- Abschnitt 35: In diesem Planetwalzenabschnitt schäumt das Gemisch sehr stark auf, weil ein großes Druckgefälle durch die Ringdüse 20 zwischen Abschnitt 34 und 35 geschaffen wird. Der Schaum des Gemisches aus Polymerschmelze, Schleppmittel und Restmonomeren wird durch die um ihre Achse rotierenden und gleichzeitig umlaufenden Planeträder 4 (Fig. 7) durch einen Walzeneffekt zerstört. Durch diesen Vorgang werden Restmonomerbläschen zerstört und das somit freigesetzte Gas der Bläschen wird durch den Unterdruck ausgehend von der Entgasungsöffnung 12 abgesaugt.
- Abschnitt 36: In diesem Hochleistungsentgasungsabschnitt erfolgt das Ausbreiten der Schmelze zu dünnen Schichten sowie der Hochleistungsentgasungsvorgang.

Die Abschnitte 30 - 36 können je nach dem zu entgasenden Material beliebig oft erneut hintereinander geschaltet werden. Das Einschneckenteil in Abschnitt 31, der Blister in Abschnitt 32 und das Zahnscheibenteil 26 in Abschnitt 33 weisen eine gemeinsame Welle auf, die mit der Zentralspindel drehfest verbunden ist.

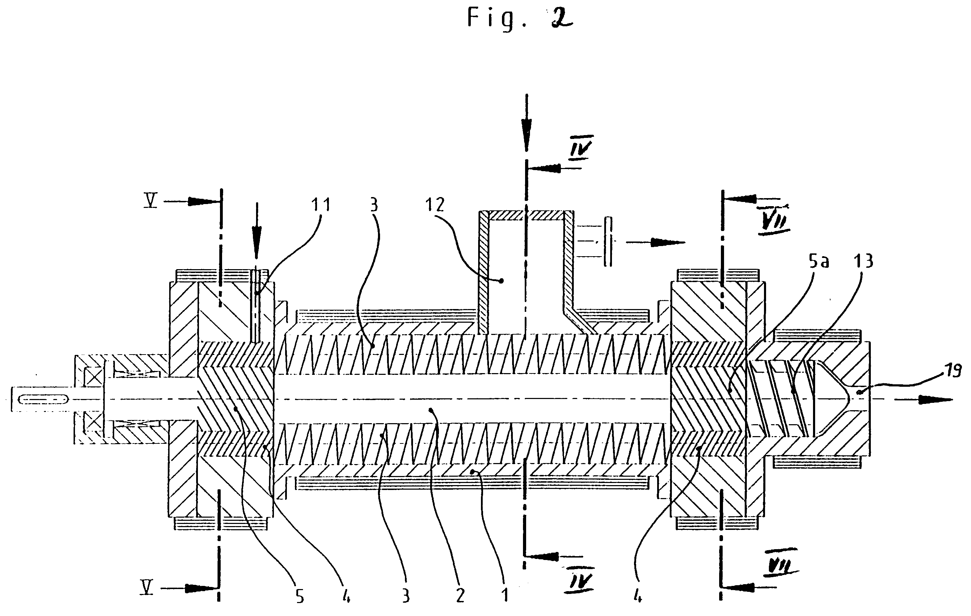

Nachfolgend wird die im Abschnitt 36 und in Fig. 2 gezeigte Hochleistungsentgasungseinrichtung im Detail beschrieben.

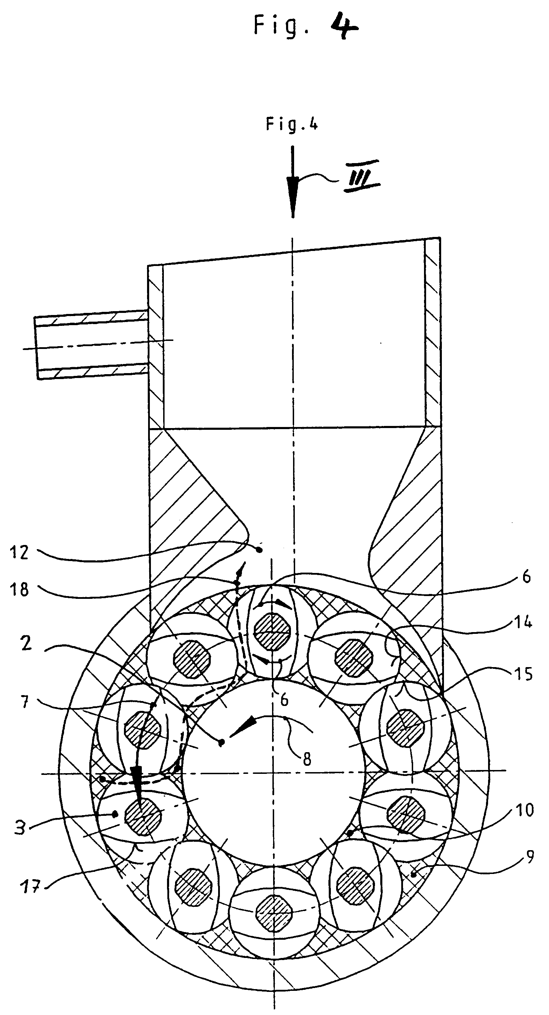

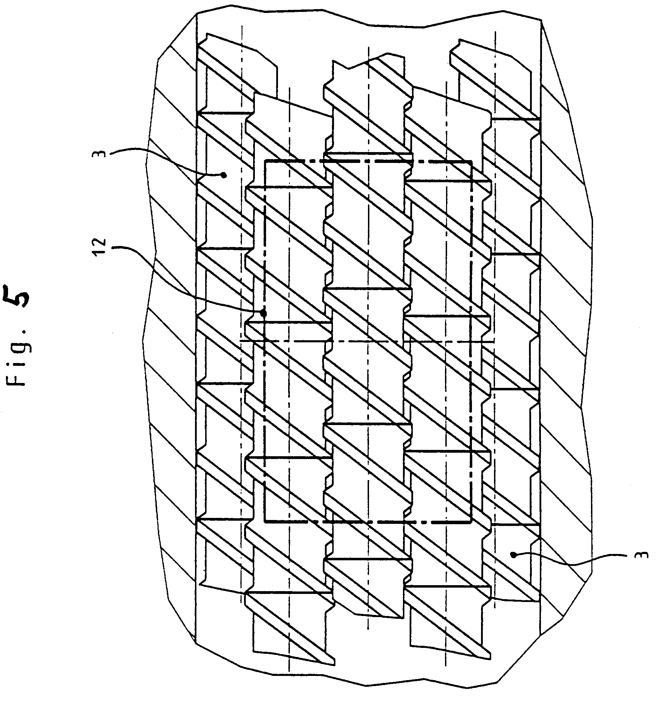

In einem Gehäuse 1 ist eine zentrale Welle 2 koaxial angeordnet. Um die Welle 2 sind in gleichmäßigen Abständen die dicht ineinander greifenden, gleichsinnig rotierenden Gleichdrallschnecken oder Dünnschichtwellen 3 angeordnet, die miteinanden in einem kämmenden Eingriff stehen, wie in Fig. 4 und Fig. 5 zu erkennen ist.

Der Antrieb zur Rotation der Dünnschichtwellen 3 um ihre eigene Achse und gleichzeitig um die zentrale Welle 2 erfolgt über jeweils an beiden Wellenenden drehfest damit verbundene, verzahnte Planeträder 4 (Fig. 2), die mit einer ebenfalls verzahnten angetriebenen Zentralspindel 5 oder Planetwalze 5 zusammenwirken. Die Zentralspindel 5, die Welle 2, die Zentralspindel 5a und ein Einschneckenteil 13 sind drehfest miteinander verbunden (siehe auch Fig. 1, Antriebsteil 30).

Der Antrieb einer ähnlichen Einrichtung wird im Detail in der eingangs erwähnten US-PS 5,108,711 der Anmelderin beschrieben.

Durch eine Drehung der eine Verzahnung aufweisenden Zentralspindel 5 werden die ebenfalls eine Verzahnung aufweisenden Planeträder 4 in eine Rotation um die eigene Achse und gleichzeitig in eine um die Zentralspindel 5 laufende überlagerte Bewegung gesetzt, was durch Pfeile 6, 7, und 8 in Fig. 4 dargestellt wird.

Da die Planeträder 4 drehfest mit den Dünnschichtwellen 3 und die Zentralspindel 5 drehfest mit der Welle 2 verbunden ist, erfolgt eine, wie in Fig. 4 dargestellte Rotation der Teile (Pfeile 6, 7, 8).

In Fig. 4 sind die nicht mit Schmelze gefüllten freien Zwickelbereiche 9 und 10 durch eine karierte Schraffur dargestellt.

Durch die nur einen kleinen Ringspalt freilassende Ringdüse 20 (Fig. 1) oder durch eine Einspeiseöffnung 11 (Fig. 2) gelangt die Schmelze in den Planetwalzenantriebsteil, bestehend aus den Planeträdern 4 und der Zentralspindel 5 und wird in Richtung der eigentlichen Entgasungseinrichtung durch die schräge Verzahnung der Spindeln gefördert.

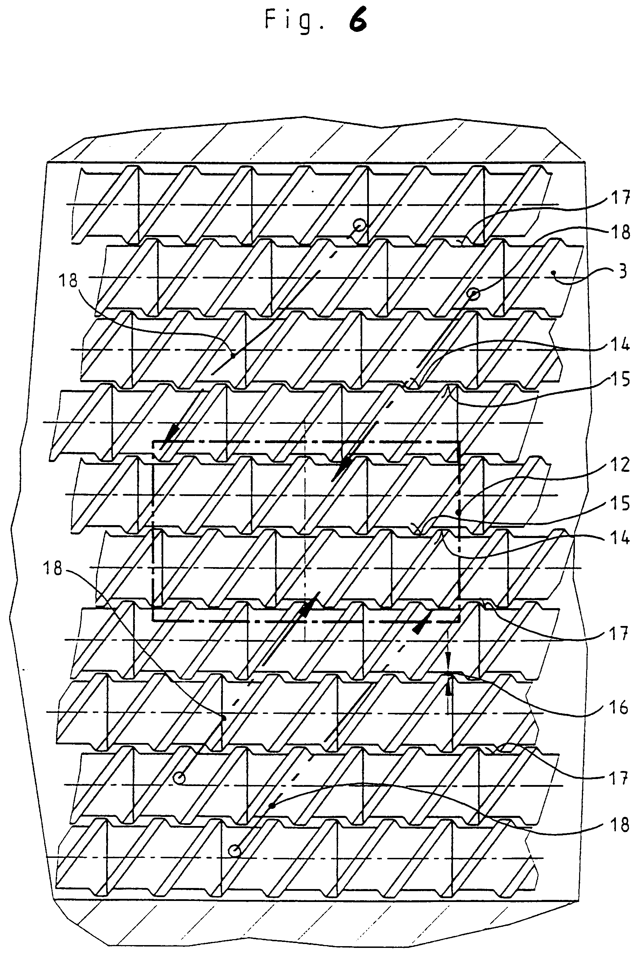

Die Schmelze wird von den Dünnschichtwellen 3 übernommen und gleichmäßig auf der Oberfläche der Dünnschichtwellen 3 verteilt, bedingt durch den kämmenden abstreichenden Vorgang (Fig. 6) des einen Schneckensteges 14 mit dem benachbarten Schneckensteg 15 der benachbarten Dünnschichtwelle 3.

Die dünne Schicht wird ausgebildet entsprechend der Dicke des Abstandes 16 eines Schneckenkammes 14 bzw. 15 zum Ganggrund 17 der benachbarten Dünnschichtwelle 2, wie gezeigt in Fig. 6. Es entsteht somit auf allen Dünnschichtwellen 3 eine gleichmäßig dicke Schmelzeschicht, die sich hervorragend durch Unterdruck entgasen läßt, d.h. die dünne Wandung der winzigen Restmonomerbläschen platzt, wenn der freie Raum einem Unterdruck ausgesetzt wird. Das freigesetzte Gas aus den Bläschen (Restmonomere oder dgl.) wird dann durch die Entgasungsöffnung 12 abgesaugt.

Wird der Extruder mit höherem Füllgrad betrieben, so bildet sich vor den fördernden Schneckenstegen 14, 15 zusätzlich zu den dünnen Schmelzeschichten eine Schmelzefront bzw. ein Schmelzepool, der ständig umgeschichtet wird. Die sich hierbei bildenden, neuen Oberflächen werden ebenfalls kontinuierlich dem angelegten Unterdruck ausgesetzt. Dadurch, daß im Gegensatz zu Doppelschneckenextrudern freie Zwickelbereiche vorhanden sind, ist durch diese zusätzliche Oberflächenbildung und somit in überraschender und nicht zu erwartender Weise eine erhebliche Steigerung der Entgasungsleistung möglich.

Die gute Entgasungsleistung basiert nicht nur auf dünnen Schichten, sondern zusätzlich auf der Tatsache, daß diese Schmelzefronten axial zu den Dünnschichtwellen transportiert und dabei ständig umgeschichtet werden, wodurch sich eine höhere, sich ständig erneuernde Oberflächenerneuerung ergibt.

Der Verlauf des Unterdruckes wird ausgehend von der Entgasungsöffnung 12 in Fig. 4 und 6 gezeigt.

Die Pfeile 18 in Fig. 4 und 6 zeigen den Gasverlauf beim Anlegen eines Unterdruckes bzw. Vakuums an die Entgasungsöffnung 12.

Aus diesem schematisiert dargestellten Verlauf wird deutlich, daß nur durch eine Entgasungsöffnung das gesamte innere Gehäuse 1 bzw. alle Zwickelbereiche 9 und 10 im Gehäuse 1 dem Unterdruck bzw. Vakuum ausgesetzt werden.

Es ist somit erstmals möglich, auch den unteren der Entgasungsöffnung abgewandten Bereich einer Extrusionseinrichtung einem Entgasungsvorgang auszusetzen, weil die Schmelze auf den Dünnschichtwellen 3 bleibt. Die Zwickelbereiche 9 und 10 füllen sich nicht mit Schmelze, weil die Dünnschichtwellen 3 die Schmelze auf ihren Oberflächen halten bzw. zurückfördern.

Da die Dünnschichtwellen 3 sowohl eine Rotation um ihre eigene Achse als auch um die Welle 2 vollführen, nehmen sie evtl. an der glatten Gehäusewandung 1 bzw. an der glatten Wellenwandung der Welle 2 anhaftende Schmelze wieder in die Schneckengänge mit zurück. Da die Schneckenstege 14 und 15 in einem Steigungswinkel zueinander angeordnet sind, erfolgt je nach Steiungswinkel eine schnelle oder langsame kontinuierliche Förderung der Schmelze durch den Planetwalzenabschnitt 35 hindurch zum Einschneckenteil 13 und zur Ausstoßöffnung 19.

Hervorragende Ergebnise wurden beim Einsatz der erfindungsgemäßen Vorrichtung zur Entmonomerisierung von hochviskosen Polyamidschmelzen durch Entgasung erzielt, die mit herkömmlichen Entgasungsextrudern nur sehr mangelhaft von ihren Restmonomeranteilen befreit werden können.

Als besonderer Vorteil des Hochleistungsentgasungsextruders gegenüber herkömmlichen Extrudern stellte sich bei der Entmonomerisierung von Polyamid 6 heraus, daß die mechanische temperaturerhöhende Energieeinleitung in die Kunststoffschmelze während der Entgasung sehr gering ist. Durch die geringe mechanische Energieeinleitung kann die Entgasung unter besonders schonenden Bedingungen bei geringen Materialtemperaturen durchgeführt werden. (T_{Mat} ≈ 235 bis 240° C anstelle bei Zweischneckenextrudern von T_{Mat} ≈ 290° C).

Aber auch wenn die erfindungsgemäße Vorrichtung nicht zum Entgasen, sondern zum Begasen von Materialien eingesetzt wird, um chemische Reaktionen in zähflüssigen Materialien darstellen zu können, werden äußerst gute Ergebnisse erzielt. Da die zähflüssige Masse auf den Dünnschichtwellen zu sehr dünnen Schichten mit einer riesigen Oberfläche ausgebreitet und dann mit einem reaktiven Gas beaufschlagt wird, welches durch die Entgasungsöffnung unter Druck eingespeist wird, erfolgt eine sehr schnelle und äußerst gleichmäßige Reaktion.

## Patentansprüche

1. Vorrichtung zur Entgasung von thermoplastischen Kunststoffschmelzen, hochmolekularen Polymeren oder ähnlicher zu entgasender flüssiger bis zähflüssiger Stoffe sowie zum Nachkondensieren und Entgasen von Polyamid- oder Polyesterschmelzen, mit einem in einem Hochleistungsentgasungsabschnitt (36) eine glatte Innenwandung sowie eine Entgasungsöffnung aufweisenden Gehäuse (1), in dem koaxial eine zentrale, antreibbare, zylindrische Welle (2) mit einer glatten Oberfläche angeordnet ist, und in dem mehrere koaxial gleichsinnig antreibbare, achsparallele Dünnschichtwellen (3) um die Welle (2) in gleichmäßigen Abständen drehbar gelagert sind, die um ihre eigene Achse rotieren und um die Welle (2) umlaufen, wobei ein Schneckendichtprofil jeder Dünnschichtwelle (3) mit den Schneckendichtprofilen der zu ihren beiden Seiten angeordneten Dünnschichtwellen (3) kämmt, so daß sich dünne Schichten des Behandlungsgutes auf den Dünnschichtwellen (3) ausbilden, wobei die Dünnschichtwellen (3) an ihren oberen und/oder unteren Enden als Planeträder (4) ausgebildet sind, die über eine entsprechend verzahnte Zentralspindel (5) angetrieben werden, deren Antriebswelle aus dem Gehäuse (1) herausgeführt ist, und wobei die Dünnschichtwellen (3) sich an der glatten Innenwandung des Gehäuses (1) und an der glatten Oberfläche der zentralen Welle (2) abrollend und abstreifend ausgebildet sind.

2. Vorrichtung nach Anspruch 1, dadurch gekennzeichnet, daß vor dem Hochleistungsentgasungsabschnitt (36) ein einen Schmelzedruck aufbauender Einschneckenabschnitt (31) angeordnet ist, an den sich ein schmelzestauender und eine Schmelzeabdichtung schaffender Blisterabschnitt (32) anschließt, daß dem Blisterabschnitt (32) ein, eine Misch- und Homogenisierwirkung gewährleistender Zahnscheibenabschnitt (33) nachgeordnet ist, daß dem Zahnscheibenabschnitt (33) eine Schleppmitteleinspritzdüse (25) zugeordnet ist, daß im Anschluß an den Zahnscheibenabschnitt (33) ein Ringdüsenabschnitt (34) angeordnet ist und daß sich an diesen ein, einen Walzeffekt ausübender Planetwalzenabschnitt (35) anschließt.

3. Vorrichtung nach den Ansprüchen 1 und 2, dadurch gekennzeichnet, daß der Einschneckenabschnitt (31) eine Länge von 3 bis 5 D (D = Schneckendurchmesser) aufweist.

4. Vorrichtung nach den Ansprüchen 1 und 2, dadurch gekennzeichnet, daß der Zahnscheibenabschnitt (33) eine Länge von 1 bis 3 D aufweist.

5. Vorrichtung nach den Ansprüchen 1 und 2, dadurch gekennzeichnet, daß der Planetwalzenabschnitt (35) Planeträder (4) und eine Zentralspindel (5) aufweist und daß das die Planeträder (4) umgebende Gehäuse eine mit den Planeträdern (4) kooperierende Innenverzahnung aufweist.

6. Vorrichtung nach den Ansprüchen 1 und 2, dadurch gekennzeichnet, daß die Schnecke des Einschneckenabschnittes (31), der Blister des Blisterabschnittes (32), die Zahnscheiben (26) des Zahnscheibenabschnittes (33) auf einer gemeinsamen Welle (11) angeordnet sind und daß die gemeinsame Welle (11) drehfest mit der Zentralspindel (5) und der glatten Welle (2) verbunden sind.

7. Vorrichtung nach den Ansprüchen 1 und 2, dadurch gekennzeichnet, daß dem ersten Hochleistungsentgasungsabschnitt (36) ein zweiter nachgeschaltet wird und zwischen beiden jeweils ein Einschneckenabschnitt (31), ein Blisterabschnitt (32), ein Zahnscheibenabschnitt (33) und ein Ringdüsenabschnitt (34) angeordnet sind.

8. Vorrichtung nach Anspruch 1 und einem oder mehreren der weiteren Ansprüche, dadurch gekennzeichnet, daß die Vorrichtung waagerecht angeordnet und das Gehäuse (1) an seiner Oberseite einen Entgasungsdom (12) aufweist, und daß an den Entgasungsdom (12) eine Unterdruckleitung (20) angeschlossen ist.

9. Vorrichtung nach Anspruch 1 und einem oder mehreren der weiteren Ansprüche, dadurch gekennzeichnet, daß das Gehäuse (1) eine Begasungsöffnung, in die ein reaktives Gas unter Druck eingespeist wird, aufweist, derart, daß die Vorrichtung zur Begasung der Materialien verwendbar ist.

## Claims

1. Apparatus for the degassing of molten masses of thermoplastic plastics materials, high-molecular polymers or the like to form degassing, liquid to viscous substances, and for the subsequent condensing and degassing of molten masses of polyamides or polyesters, including a housing (1), which has a smooth internal wall and a degassing aperture in a high-output degassing section (36), and in which housing a central, drivable, cylindrical shaft (2), provided with a smooth surface, is coaxially disposed, and in which housing a plurality of axis-parallel thin-layer shafts (3), which are coaxially drivable in the same direction, are mounted so as to be rotatable about the shaft (2) at uniform intervals, which thin-layer shafts rotate about their own axis and circulate about the shaft (2), a screw sealing profile of each thin-layer shaft (3) meshing with the screw sealing profiles of the thin-layer shafts (3), which are disposed on both of its sides, so that thin layers of the material to be treated are formed on the thin-layer shafts (3), the thin-layer shafts (3) being configured as planet wheels (4) at their upper and/or lower ends, which planet wheels are driven via a correspondingly toothed central spindle (5), the drive shaft of which spindle extends from the housing (1), and the thin-layer shafts (3) being provided so as to roll and scrape along the smooth internal wall of the housing (1) and along the smooth surface of the central shaft (2).

2. Apparatus according to claim 1, characterised in that disposed upstream of the high-output degassing section (36) there is a single-screw section (31), which builds-up a molten mass pressure and communicates with a molten mass-obstructing obstruction member section (32), which creates a molten mass sealing, in that a toothed pulley section (33) is disposed downstream of the obstruction member section (32) and ensures a mixing and homogenising action, in that a stripping agent injection nozzle (25) is associated with the toothed pulley section (33), in that a annular nozzle section (34) is disposed subsequent to the toothed pulley section (33), and in that a planet roller section (35), which exerts a rolling effect, communicates with said ring nozzle section.

3. Apparatus according to claims 1 and 2, characterised in that the single-screw section (31) has a length of between 3 and 5 D (D = screw diameter).

4. Apparatus according to claims 1 and 2, characterised in that the toothed pulley section (33) has a length of between 1 and 3 D.

5. Apparatus according to claims 1 and 2, characterised in that the planet roller section (35) includes planet wheels (4) and a central spindle (5), and in that the housing, which surrounds the planet wheels (4), has an internal toothing co-operating with the planet wheels (4).

6. Apparatus according to claims 1 and 2, characterised in that the screw of the single-screw section (31), the obstruction member of the obstruction member section (32) and the pulleys (26) of the toothed pulley section (33) are disposed on a common shaft (11), and in that the common shaft (11) is non-rotatably connected to the central spindle (5) and the smooth shaft (2).

7. Apparatus according to claims 1 and 2, characterised in that a second high-output degassing section is connected downstream of the first high-output degassing section (36), and a single-screw section (31), an obstruction member section (32), a toothed pulley section (33) and an annular nozzle section (34) are disposed between the two high-output degassing sections.

8. Apparatus according to claim 1 and one or more of the additional claims, characterised in that the apparatus is horizontally disposed, and the housing (1) has a degassing dome (12) on its upper surface, and in that a low-pressure conduit (20) communicates with the degassing dome (12).

9. Apparatus according to claim 1 and one or more of the additional claims, characterised in that the housing (1) includes a gassing aperture, into which a reactive gas is supplied under pressure, such that the apparatus is employable to gas the materials.

## Revendications

1. Dispositif pour dégazage de matières thermoplastiques, de polymères de poids moléculaires élevés ou de matières analogues d'états liquides à visqueux à dégazer, et notamment pour post-condensation et dégazage de masses fondues de polyamides ou de polyesters, comprenant un carter (1), comportant dans une partie de dégazage de grande puissance (36) une paroi intérieure lisse et une ouverture de dégazage et dans lequel est disposé coaxialement un arbre cylindrique central (2), pouvant être entraîné et comportant une surface lisse, et où il est en outre prévu coaxialement plusieurs arbres à couches minces (3) d'axes parallèles, pouvant être entraînés dans le même sens, disposés à des espacements uniformes autour de l'axe central (2) en pouvant tourner autour de leurs axes respectifs et pivoter autour de l'arbre central (2), dispositif dans lequel un profil d'étanchéité de denture hélicoïdale de chaque arbre à couche mince (3) est en prise avec les profils d'étanchéité des dentures hélicoïdales des arbres à couches minces (3) disposés sur ses deux côtés de telle sorte que des couches minces du produit à traiter se forment sur les arbres à couches minces (3), lesdits arbres à couches minces (3) étant agencés à leurs extrémités supérieures et/ou à leurs extrémités inférieures comme des pignons satellites (4), qui sont entraînés par l'intermédiaire d'une broche centrale (5) pourvue d'une denture correspondante et dont l'arbre d'entraînement est guidé hors du carter (1), et où les arbres à couches minces (3) sont agencés de manière à rouler et à frotter contre la paroi intérieure lisse du carter (1) et contre la surface lisse de l'arbre central (2).

2. Dispositif selon la revendication 1, caractérisé en ce qu'il est prévu avant la partie de dégazage de grande puissance (36) une partie à denture hélicoïdale d'admission (31) créant une pression dans la masse fondue et qui est suivi par une partie-formant ampoule ("Blister") (32) stabilisant la masse fondue et créant une étanchéité pour cette masse fondue, en ce qu'il est prévu après la partie-"Blister" (32) une partie à disques dentés (33) assurant une action de mélange et d'homogénéisation, en ce que cette partie à disques dentés (33) est associée à une buse (25) d'injection d'agent d'entraînement, en ce qu'il est prévu à la suite de la partie à disques dentés (33) une partie à buse annulaire (34) et en ce que cette partie est suivie par une partie formant train planétaire (35) exerçant un effet de laminage.

3. Dispositif selon les revendications 1 et 2, caractérisé en ce que la partie à denture hélicoïdale d'admission (31) a une longueur de 3 à 5 D (D = diamètre de denture hélicoïdale).

4. Dispositif selon les revendications 1 et 2, caractérisé en ce que la partie à disques dentés (33) a une longueur de 1 à 3 D.

5. Dispositif selon les revendications 1 et 2, caractérisé en ce que la partie formant train planétaire (35) comporte des pignons satellites (4) et une broche centrale (5) et en ce que le carter entourant les pignons satellites (4) comporte une denture intérieure coopérant avec les pignons satellites (4).

6. Dispositif selon les revendications 1 et 2, caractérisé en ce que la denture hélicoïdale de la partie à denture hélicoïdale d'admission (31), la zone formant ampoule (blister) de la partie-"Blister" (32), les disques dentés (26) de la partie à disques dentés (33) sont disposés sur un arbre commun (11) et en ce que l'arbre commun (11) est relié de façon non tournante à la broche centrale (5) et à l'arbre lisse (2).

7. Dispositif selon les revendications 1 et 2, caractérisé en ce qu'il est prévu après la première partie de dégazage de grande puissance (36) une seconde partie de dégazage de grande puissance et, entre les deux parties précitées, respectivement une partie à denture hélicoïdale d'admission (31), une partie-"Blister" (32), une partie à disques dentés (33) et une partie à buse annulaire (34).

8. Dispositif selon la revendication 1 et une ou plusieurs des autres revendications, caractérisé en ce que ce dispositif est disposé horizontalement et le carter (1) comporte, sur son côté supérieur, un dôme de dégazage (12) et en ce que ce dôme de dégazage (12) est relié à une canalisation de dépression (20).

9. Dispositif selon la revendication 1 et une ou plusieurs des autres revendications, caractérisé en ce que le carter (1) comporte une ouverture de gazéification dans laquelle est injecté un gaz réactif sous pression de telle sorte que le dispositif puisse être utilisé pour gazéification de matières.
